# EUROPEAN PATENT APPLICATION

(11) **EP 4 488 923 A1**
(43) Date of publication of application: **08.01.2025**
(21) Application number: 22928790.9
(22) Date of filing: 28.02.2022
(51) Int. Cl.: G06Q 50/30

(54) **INFORMATION PROCESSING DEVICE**

(71) Applicant: Pioneer Corporation, Tokyo 113-0021 (JP)
(72) Inventor: KIMURA, Hiromi, Bunkyio-ku, 113-0021, Tokyo (JP)
(74) Representative: Grünecker Patent- und Rechtsanwälte PartG mbB
(86) International application number: PCT/JP2022/008412
(87) International publication number: WO 2023/162268

(57) **Abstract**

To distribute information regarding a moving body while protecting privacy. A moving body position information acquisition processing step of acquiring a moving body that goes around a plurality of visit destinations, and distribution information including information regarding a current position of the moving body is distributed to a terminal device associated with the visit destinations, the distribution information includes first information and second information different from the first information, the first information is distributed to a terminal device associated with a visit destination to be visited next by the moving body, and the second information is distributed to a terminal device associated with a visit destination other than a visit destination to be visited next by the moving body.

## Description

### Technical Field

The present invention relates to an information processing device.

### Background Art

There is a technology in which a position of a pickup bus of a facility such as a kindergarten, a nursery school, or a day care is distributed to a terminal device used by a parent or a guardian of a pre-school child of the kindergarten or the nursery school or a day care facility user so that the parent or guardian can confirm the position of the pickup bus (for example, Patent Literature 1).

### Citation List

### Patent Literature

Patent Literature 1: JP 2018 -63466 A

### Summary of Invention

### Technical Problem

The pickup bus may pick up and drop off children or facility users in front of their homes. In this case, when the detailed position of the pickup bus is distributed to the terminal device, there is a possibility that the home position is specified by the parent or guardian of other children or facility users on the basis of a stop position of the pickup bus.

An example of the problem to be solved by the present invention is to distribute information on a moving body (mobile object) while protecting privacy.

### Solution to Problem

In order to solve the above problem, the invention according to claim 1 includes: a moving body position information acquisition processing unit that acquires a moving body that goes around a plurality of visit destinations; and a distribution processing unit that distributes distribution information including information regarding a current position of the moving body to a terminal device associated with the visit destinations, in which the distribution information includes first information and second information different from the first information, and the distribution processing unit distributes the first information to a terminal device associated with a visit destination to be visited next by the moving body, and distributes the second information to another terminal device associated with a visit destination other than the visit destination to be visited next by the moving body.

An invention according to claim 14 is an information processing method executed by a computer, the method including: a moving body position information acquisition processing step of acquiring a moving body that goes around a plurality of visit destinations; and a distribution processing step of distributing distribution information including information regarding a current position of the moving body to a terminal device associated with the visit destination, in which the distribution information includes first information and second information different from the first information, and in the distribution processing step, the first information is distributed to the terminal device associated with the visit destination to be visited next by the moving body, and the second information is distributed to the terminal device associated with the visit destination other than the visit destination to be visited next by the moving body.

An information processing program according to claim 15 causes a computer to execute the information processing method according to claim 14.

The invention according to claim 16 stores the information processing program according to claim 15.

### Brief Description of Drawings

Fig. 1 is an information processing device 100 according to an embodiment of the present invention.
Fig. 2 is a diagram illustrating a moving body information distribution system including an information processing device 100.
Fig. 3 is a diagram illustrating a control unit 110.
Fig. 4 is a diagram illustrating distribution of distribution information.
Fig. 5 is a diagram illustrating a terminal device 200.
Fig. 6 is a diagram illustrating a control unit 210 of the terminal device 200.
Fig. 7 is a diagram illustrating an area where a moving body currently exists.
Fig. 8 is a diagram illustrating a divided area DA.
Fig. 9 is a diagram illustrating an example of processing operation in an area division processing unit 113.
Fig. 10 is a diagram illustrating a change in size of the divided area DA.
Fig. 11 is a diagram illustrating the divided area DA.
Fig. 12 is a diagram illustrating switching of distribution information by the divided area.
Fig. 13 is a diagram illustrating switching of distribution information by the divided area.
Fig. 14 is a diagram illustrating a divided section DS.

### Description of Embodiments

An information processing device according to an embodiment of the present invention includes: an information processing device including: a moving body position information acquisition processing unit that acquires a moving body that goes around a plurality of visit destinations; and a distribution processing unit that distributes distribution information including information regarding a current position of the moving body to a terminal device associated with the visit destinations, in which the distribution information includes first information and second information different from the first information, and the distribution processing unit distributes the first information to a terminal device associated with a visit destination to be visited next by the moving body, and distributes the second information to another terminal device associated with a visit destination other than the visit destination to be visited next by the moving body. Therefore, in the present embodiment, information different from information distributed to terminal devices associated with other visit destinations can be distributed to terminal devices associated with the visit destinations to be visited next by the moving body while preventing the visit destinations (for example, a home position of the user of the terminal device) associated with the terminal devices from being identified by others. This makes it possible to distribute information regarding the moving body while protecting privacy.

The first information may include a detailed current position of the moving body, and the second information may not include the detailed current position of the moving body. In this way, it is possible to distribute the detailed position of the moving body to the terminal device associated with the visit destination to be visited next by the moving body while preventing the visit destinations (for example, the home position of the user of the terminal device) associated with the terminal devices from being specified by others.

The second information may include information indicating an area where the moving body currently exists. In this way, it is possible for the users of the plurality of terminal devices to check the rough position of the moving body while preventing the visit destinations (for example, the home position of the user of the terminal device) associated with the terminal devices from being specified by others.

The two-dimensional area including all of the plurality of visit destinations may be divided into a plurality of divided areas, and the second information may include information indicating in which area of the plurality of divided areas the moving body exists. With this configuration, it is also possible for the users of the plurality of terminal devices to check the rough positions of the moving bodies while preventing the visit destinations (for example, the home position of the user of the terminal device) associated with the terminal devices from being specified by others.

It is preferable to further include an area division processing unit that divides a two-dimensional area including all of the plurality of visit destinations into the plurality of divided areas. In this way, every time a visit destination to which a moving body goes around is changed, a two-dimensional area including all the visit destinations to which the moving body goes around can be divided into a plurality of divided areas. Therefore, even if the visit destination to which the moving body goes around is changed, the users of the plurality of terminal devices can check the rough positions of the moving body while preventing the visit destinations (for example, the home position of the user of the terminal device) associated with the terminal devices from being specified by others.

The divided area may include a plurality of buildings. In this way, it is possible to prevent a position (for example, home position) at a visit destination from being specified by another person also from information indicating in which of a plurality of divided areas the divided area exists.

The divided area may include one or less of the visit destinations. With this configuration, it is possible to more reliably prevent a visit destination (for example, the home position of the user of the terminal device) associated with each of the terminal devices from being identified by another person.

The distribution processing unit may distribute the first information to a terminal device associated with a visit destination to be visited next by the moving body after the moving body enters a divided area including a visit destination to be visited next by the moving body. This makes it possible to prevent the user of the terminal device associated with the next visit destination from specifying the detailed position of the directly previous visit destination.

The distribution processing unit may distribute the first information to a terminal device associated with a visit destination to be visited next by the moving body after the moving body moves out of a divided area including a visit destination to which the moving body has visited directly (or immediately) before. This also makes it possible to prevent the user of the terminal device associated with the next visit destination from specifying the detailed position of the directly previous visit destination.

There may be further provided a travel route division processing unit that divides a travel route of the moving body into a plurality of divided sections, and the distribution processing unit may distribute the first information to the terminal device associated with the visit destination to be visited next by the moving body after the moving body enters the divided section including the visit destination to be visited next by the moving body. This also makes it possible to prevent the user of the terminal device associated with the next visit destination from specifying the detailed position of the directly previous visit destination.

There may be further provided a travel route division processing unit that divides a travel route of the moving body into a plurality of divided sections, and the distribution processing unit may distribute the first information to the terminal device associated with the visit destination to be visited next by the moving body after the moving body moves out of the divided section including the visit destination that has been visited by the moving body directly (or immediately) before. This also makes it possible to prevent the user of the terminal device associated with the next visit destination from specifying the detailed position of the directly previous visit destination.

The distribution processing unit may distribute the first information to a terminal device associated with a visit destination to be visited next by the moving body after the moving body satisfies a predetermined condition. The predetermined condition may include at least one of the moving body making a right turn or a left turn a predetermined number of times after leaving the visit destination which the moving body has visited directly before, the moving body travelling on a link different from a link including the visit destination that has been visited directly before after leaving a visit destination that has been visited directly before, and the moving body being away from the visit destination that has been visited directly before and after leaving the visit destination that has been visited directly before by a predetermined distance. This also makes it possible to prevent the user of the terminal device associated with the next visit destination from specifying the detailed position of the directly previous visit destination.

An information processing method according to an embodiment of the present invention is an information processing method implemented by a computer and includes a moving body position information acquisition processing step of acquiring a moving body that goes around a plurality of visit destinations; and a distribution processing step of distributing distribution information including information regarding a current position of the moving body to a terminal device associated with the visit destination, in which the distribution information includes first information and second information different from the first information, and in the distribution processing step, the first information is distributed to the terminal device associated with the visit destination to be visited next by the moving body, and the second information is distributed to the terminal device associated with the visit destination other than the visit destination to be visited next by the moving body. Therefore, in the present embodiment, information different from information distributed to terminal devices associated with other visit destinations can be distributed to terminal devices associated with the visit destinations to be visited next by the moving body while preventing the visit destinations (for example, a home position of the user of the terminal device) associated with the terminal devices from being identified by others. This makes it possible to distribute information regarding the moving body while protecting privacy.

Furthermore, an information processing program according to an embodiment of the present invention causes a computer to execute the information processing method described above. In this way, it is possible to distribute information on the moving body while protecting privacy using the computer.

In addition, a computer-readable storage medium according to an embodiment of the present invention stores the above-described information processing program. In this way, the information processing program described above can be distributed alone in addition to being incorporated in a device, and version upgrade or the like can be easily performed.

### Embodiment

### information processing device 100>

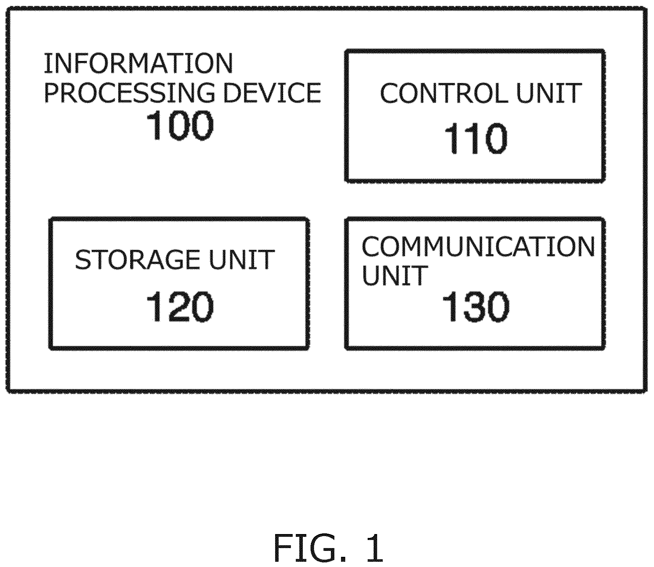

Fig. 1 is a diagram illustrating an information processing device 100 according to the present embodiment. The information processing device 100 includes a control unit 110, a storage unit 120, and a communication unit 130. The control unit 110 includes, for example, a computer. The storage unit 120 is a storage device for storing information such as a hard disk and a memory. The communication unit 130 is a communication device for transmitting and receiving information to and from another device.

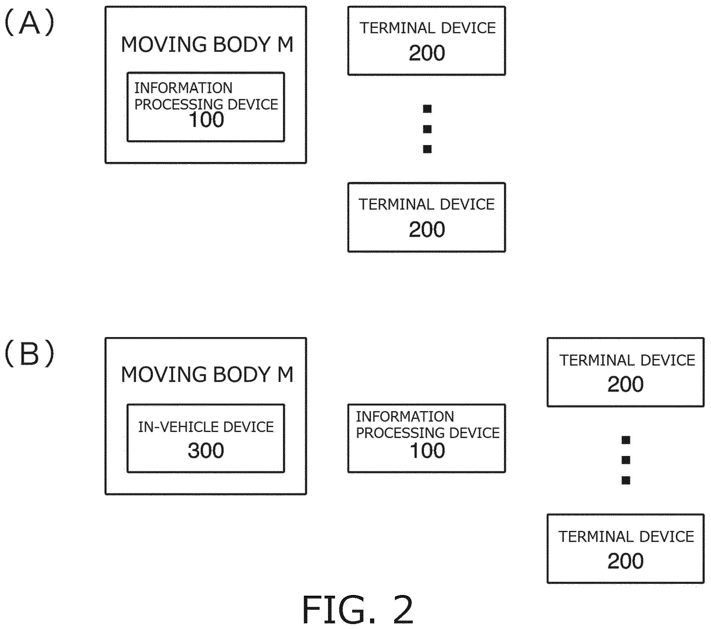

Fig. 2 is a diagram illustrating a moving body information distribution system including the information processing device 100. The information processing device 100 may be an in-vehicle device (for example, a drive recorder or a smartphone) installed in the moving body M such as a vehicle as illustrated in Fig. 2(A), or may be a device (for example, a server) installed outside the moving body M that communicates with an in-vehicle device 300 (for example, a drive recorder or a smartphone installed in the moving body M) installed in the moving body M as illustrated in Fig. 2(B).

In the case of an in-vehicle device installed in a moving body (mobile object) M such as a vehicle, the moving body information distribution system includes an information processing device 100 and a plurality of terminal devices 200 as illustrated in Fig. 2(A). In a case where the information processing device 100 is a device installed outside the moving body that communicates with the device 300 installed in the moving body M, the moving body information distribution system includes the information processing device 100, a plurality of terminal devices 200, and an in-vehicle device 300 as illustrated in Fig. 2(A). The terminal device 200 is, for example, a smartphone or a personal computer.

The moving body M is a moving body that goes around a plurality of visit destinations, and each of the plurality of terminal devices 200 is associated with one of the plurality of visit destinations. For example, the storage unit 120 stores a table in which information on visit destinations to which the moving body M is scheduled to go around and terminal devices 200 associated with the visit destinations are described.

The moving body M is a moving body on which a plurality of users rides, and is, for example, a pickup bus of a facility such as a kindergarten, a nursery school, or a day care. At this time, the visit destination where the moving body M goes around includes a position (home, road facing home, gathering place near home) related to the home of the user (for example, a kindergarten, a nursery school child, or a day care facility user who rides on the pickup bus) riding on the moving body M. The terminal device associated with the visit destination is, for example, a terminal device used by a person associated with the visit destination (for example, a parent or a guardian of a nursery school child or facility user associated with the visit destination).

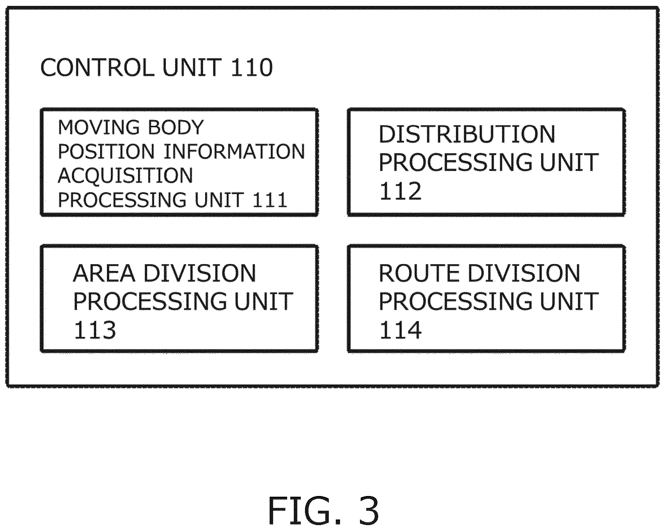

Fig. 3 is a diagram illustrating the control unit 110. A moving body position information acquisition processing unit 111 and a distribution processing unit 112 are included.

The moving body position information acquisition processing unit 111 acquires the position of the moving body M. The position of the moving body M is acquired by, for example, a device (for example, a GPS antenna) installed in the moving body M. In a case where the information processing device 100 is an in-vehicle device installed in the moving body M, the information processing device 100 may acquire the position of the moving body M from this device, or may have a device for acquiring the position of the moving body such as a GPS antenna. In a case where the information processing device 100 is a device installed outside the moving body M that communicates with the in-vehicle device 300 installed in the moving body M, the in-vehicle device 300 may acquire the position of the moving body from these devices, or may have a device for acquiring the position of the moving body such as a GPS antenna.

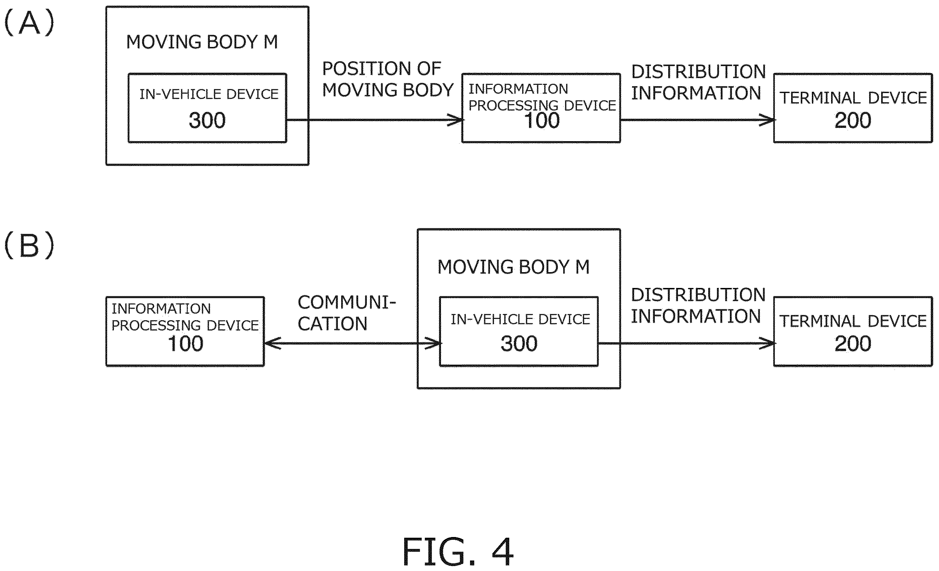

The distribution processing unit 112 distributes distribution information including information regarding the current position of the moving body M to the terminal devices 200 associated with the visit destinations. At this time, for example, in a case where the information processing device 100 is an in-vehicle device installed in the moving body M, the distribution processing unit 112 distributes the distribution information to the terminal device 200 by using communication with the terminal device 200 by the communication unit 130. Furthermore, in a case where the information processing device 100 is a device installed outside the moving body M that communicates with the in-vehicle device 300 installed in the moving body M, the distribution processing unit 112 may acquire the position of the moving body from the in-vehicle device 300 using communication with the in-vehicle device 300 by the communication unit 130 as illustrated in Fig. 4(A), and distribute the distribution information including the acquired information regarding the position of the moving body to the terminal device 200 using communication with the terminal device 200 by the communication unit 130, or may transmit the distribution information from the in-vehicle device 300 to the terminal device 200 using communication with the in-vehicle device 300 by the communication unit 130 as illustrated in Fig. 4(B).

In the present embodiment, the distribution processing unit 112 distributes the distribution information in a mode in which the detailed current position of the moving body M cannot be specified. That is, the distribution information may not include, for example, the detailed current position of the moving body M.

As described above, in the present embodiment, the detailed position of the moving body is not distributed to the terminal device. Therefore, in the present embodiment, the user of the terminal device cannot know the detailed position of the moving body. As a result, in the present embodiment, it is possible to prevent the position (for example, home position) of the visit destination from being specified by another person from the position (for example, a stop position of the moving body) of the moving body. Therefore, in the present embodiment, it is possible to distribute information regarding the moving body while protecting privacy.

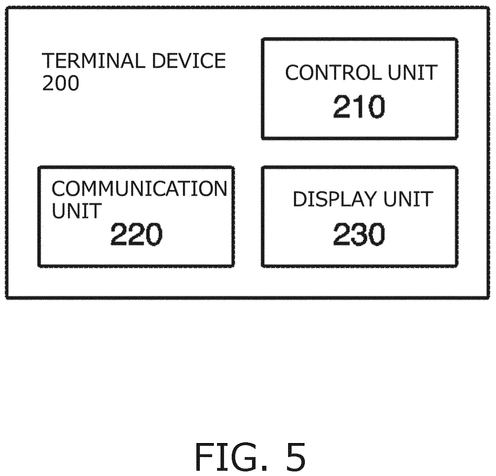

Fig. 5 is a diagram illustrating the terminal device 200. The terminal device 200 includes a control unit 210, a communication unit 220, and a display unit 230. The control unit 210 includes, for example, a computer. The communication unit 230 is a communication device for transmitting and receiving information to and from another device. The display unit 240 is a display device for displaying information such as a display.

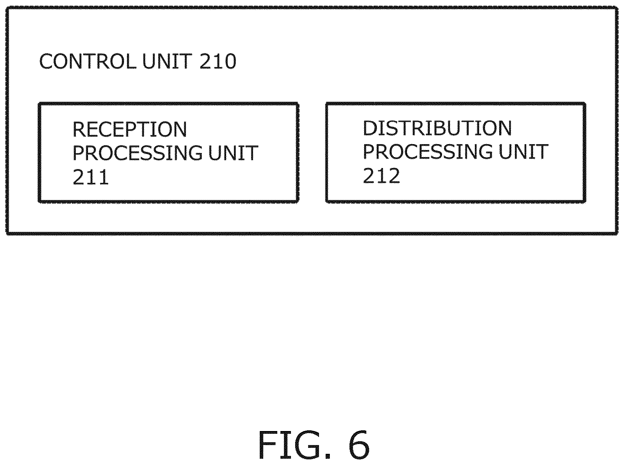

Fig. 6 is a diagram illustrating the control unit 210 of the terminal device 200. The control unit 210 includes a reception processing unit 211 that receives the distribution information distributed from the information processing device 100 by the communication unit 220, and a display processing unit 212 that displays the current position of the moving body M by the display unit 230 on the basis of the distribution information.

Therefore, in the present embodiment, the detailed position of the moving body is not displayed on the display unit of the terminal device, and the user of the terminal device cannot know the detailed position of the moving body. As a result, in the present embodiment, it is possible to prevent the position (for example, home position) of the visit destination from being specified by another person from the position (for example, a stop position of the moving body) of the moving body. Therefore, in the present embodiment, it is possible to distribute information regarding the moving body while protecting privacy.

### <Information on current position of moving body M>

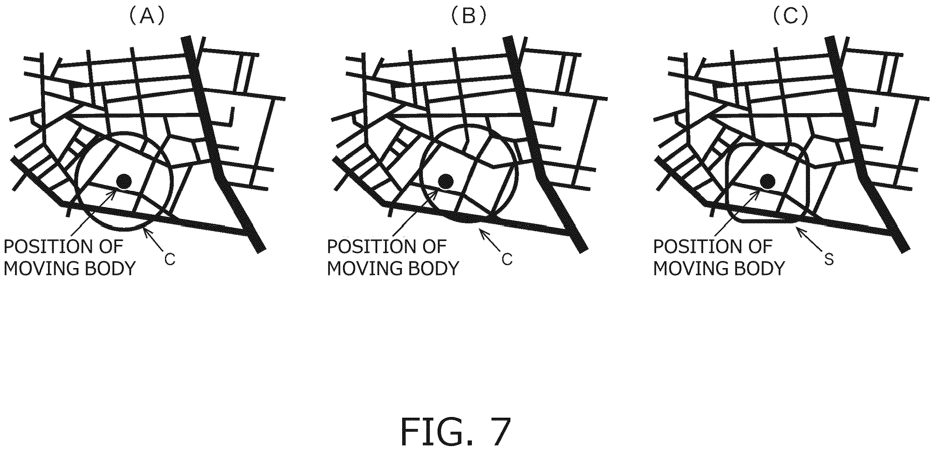

For example, the distribution processing unit 112 may distribute the details of the moving body M which is not the current position but an area where the moving body M currently exists as illustrated in Fig. 7 as the information regarding the current position of the moving body M. That is, the distribution information may include, for example, information indicating an area where the moving body M currently exists.

For example, the distribution processing unit 112 may distribute a circle C having a radius R including the current position of the moving body M as illustrated in Figs. 7(A) and 7(B) as an area where the moving body M currently exists. At this time, the current position of the moving body M may be located at the center of the circle C as illustrated in Fig. 7(A), or the current position of the moving body M may be located at a position deviated from the center of the circle C as illustrated in Fig. 7(B). Furthermore, the distribution processing unit 112 may distribute a rectangular area S including the current position of the moving body M as illustrated in Fig. 7(C) as an area where the moving body M currently exists. In general, map data is divided into constant rectangular areas. Therefore, the rectangular area may be used as the area where the moving body M currently exists. That is, the distribution information may include, as information indicating an area where the moving body M currently exists, information indicating in which area of the rectangular area the moving body M exists.

In this way, it is possible for the users of the plurality of terminal devices to check the rough position of the moving body while preventing the visit destinations (for example, the home position of the user of the terminal device) associated with the terminal devices from being specified by others.

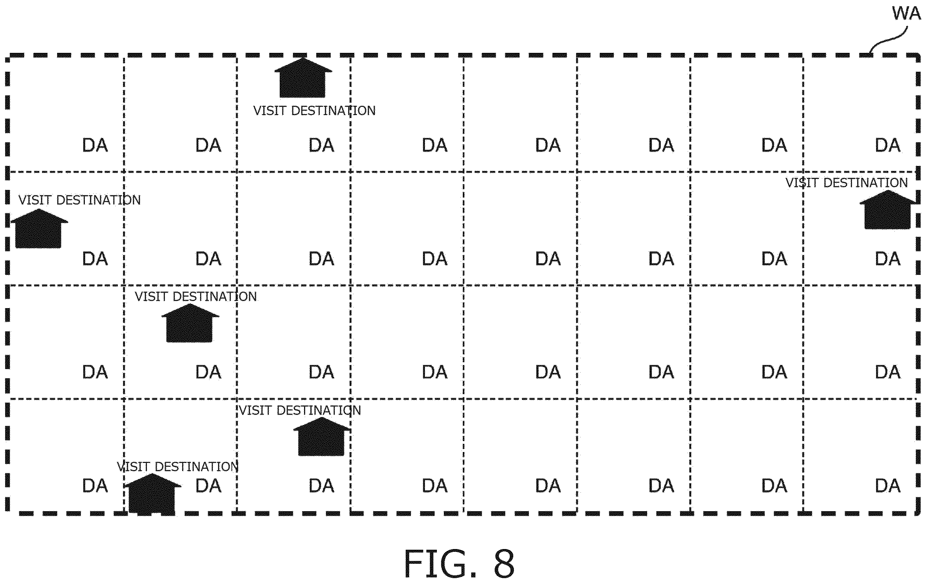

In addition, as illustrated in Fig. 8, it is preferable that a two-dimensional area WA including all the visit destinations where the moving body M goes around is divided into a plurality of divided areas DA, and the distribution processing unit 112 distributes information indicating in which area of the plurality of divided areas the moving body exists. That is, the distribution information may include information indicating in which area of the plurality of divided areas DA the moving body M exists. At this time, as illustrated in Fig. 8, the divided area DA may include one or less visit destinations, that is, the divided area DA may not include two or more visit destinations.

With this configuration, it is also possible for the users of the plurality of terminal devices to check the rough positions of the moving bodies while preventing the visit destinations (for example, the home position of the user of the terminal device) associated with the terminal devices from being specified by others.

Furthermore, for example, in a case where two visit destinations are nearby, it is conceivable that residents of the two visit destinations already know each other's home. Therefore, for example, in a case where any one of a condition of "two visit destinations are within a predetermined distance", a condition of "two visit destinations are on the same link", a condition of "two visit destinations are in the same apartment building", and a condition of "two visit destinations are in the same address" is satisfied, the two visit destinations may be included in the same divided area DA.

Furthermore, for example, in a case where there is only one building included in the divided area DA, and the one building is a visit destination, there is a possibility that a position (for example, home position) at the visit destination is specified by another person from information indicating in which area of the plurality of divided areas the one building exists. Therefore, the divided area DA may include a plurality of buildings, and particularly may include a plurality of buildings other than the visit destinations. In particular, the divided area DA may include a predetermined number or more of houses (for example, a detached house or a mansion).

Furthermore, the information processing device 100 may further include an area division processing unit 113 that divides the two-dimensional area WA including all of visit destinations where the moving body M goes around into a plurality of divided areas DA. At this time, the area division processing unit 113 may divide the two-dimensional area WA including all the visit destinations to which the moving body M goes around into a plurality of divided areas DA so that one or less visit destinations are included in the divided area DA, that is, two or more visit destinations are not included in the divided area DA. In addition, the area division processing unit 113 may include a plurality of buildings in the divided area DA.

In this way, every time a visit destination to which a moving body goes around is changed, a two-dimensional area including all the visit destinations to which the moving body goes around can be divided into a plurality of divided areas. Therefore, even if the visit destination to which the moving body goes around is changed, the users of the plurality of terminal devices can check the rough positions of the moving body while preventing the visit destinations (for example, the home position of the user of the terminal device) associated with the terminal devices from being specified by others.

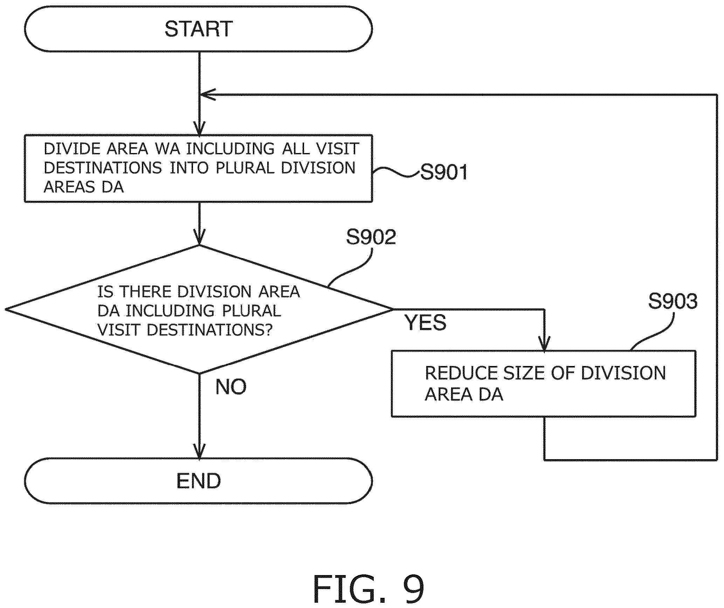

Fig. 9 is a diagram illustrating an example of processing operation in the area division processing unit 113. The two-dimensional area WA including all the visit destinations where the moving body M goes around is divided into a plurality of divided areas DA (Step S901). If there is a divided area DA including a plurality of visit destinations (YES in Step S902), a size of the divided area DA is reduced until the number of visit destinations included in the area is one or less (Step S903). If there is no divided area DA including a plurality of visit destinations (NO in Step S902), the process ends.

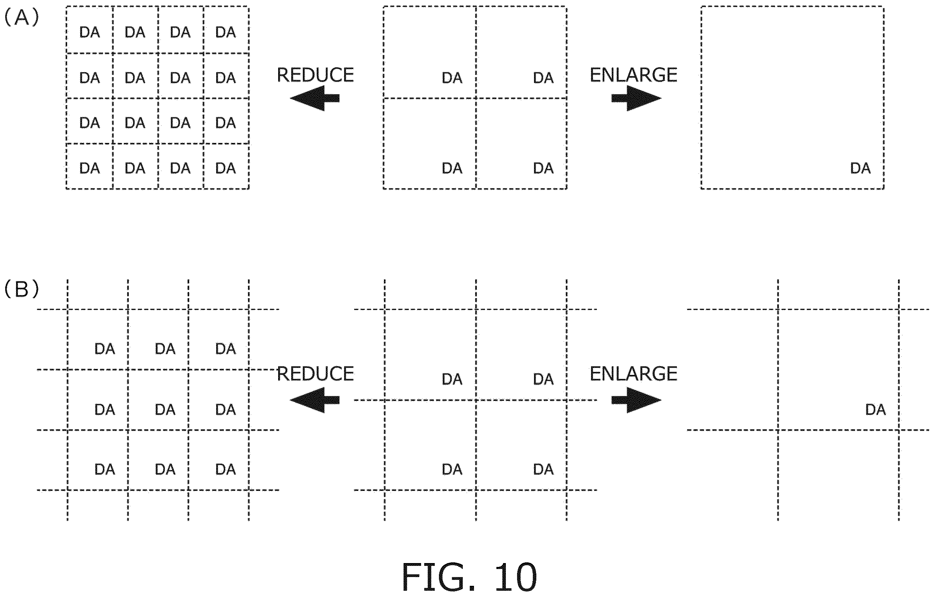

When the size of the divided area DA is changed, the divided area DA may be enlarged or reduced by combining and dividing the divided areas DA as illustrated in Fig. 10(A), or the divided area DA may be enlarged or reduced by widening or narrowing distances between grid lines defining the divided area DA as illustrated in Fig. 10(B).

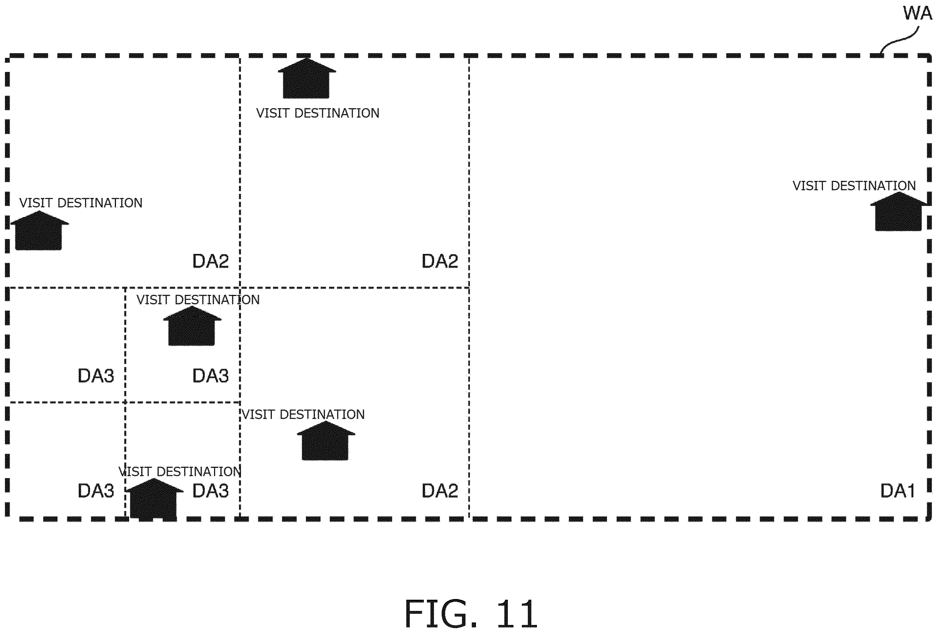

When the two-dimensional area WA including all the visit destinations where the moving body M goes around is divided into the plurality of divided areas DA, as illustrated in Fig. 8, the sizes of all the divided areas DA may be the same, or as illustrated in Fig. 11, the sizes of the divided areas DA may change according to a density of the visit destinations. In the example illustrated in Fig. 11, the sizes of divided areas DA2 and DA3 in an area where visit destinations are dense are smaller than the size of divided area DA1 in an area where visit destinations are not dense.

### <Detailed distribution of current position of moving body M>

The distribution information may include first information and second information different from the first information, and the distribution processing unit 112 may distribute the first information in the distribution information to the terminal device 200 associated with a visit destination to be visited next by the moving body, and may distribute the second information different from the first information in the distribution information to a terminal device associated with a visit destination other than the visit destination to be visited next by the moving body.

In this way, information different from information distributed to terminal devices associated with other visit destinations can be distributed to the terminal devices associated with the visit destinations to be visited next by the moving body while preventing the visit destinations (for example, the home position of the user of the terminal device) associated with the terminal devices from being identified by others.

At this time, for example, the first information may include the detailed current position, and the second information may not include the detailed current position. In addition, at this time, the second information may include information indicating an area where the moving body currently exists as illustrated in Fig. 7.

In this way, it is possible to distribute the detailed position of the moving body to the terminal device associated with the visit destination to be visited next by the moving body while preventing the visit destinations (for example, the home position of the user of the terminal device) associated with the terminal devices from being specified by others.

### <Switching of distribution information by divided area>

If the detailed position of the moving body M is distributed to the terminal device 200 associated with the next visit destination immediately after leaving the directly previous visit destination, there is a possibility that the detailed position of the directly previous visit destination is specified to the user of the terminal device 200 associated with the next visit destination.

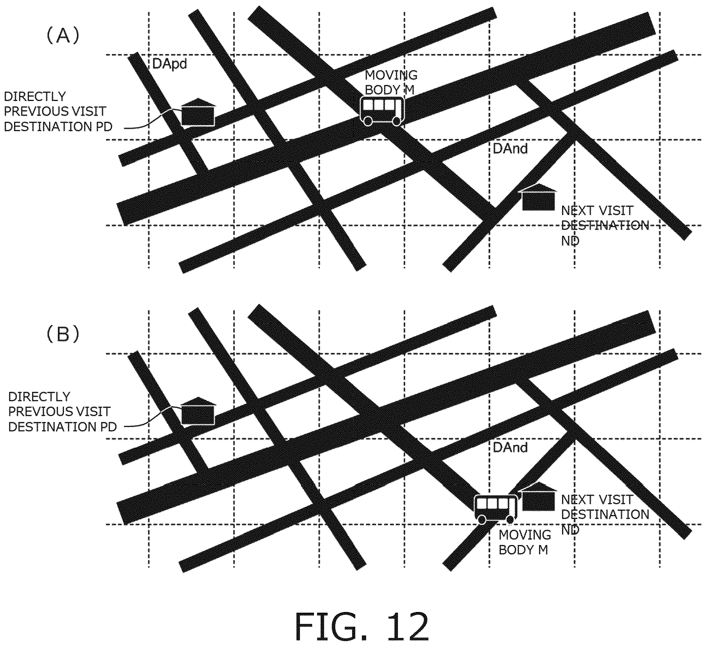

Therefore, after the moving body M enters the divided area DA including the visit destination to which the moving body M visits next, the distribution processing unit 112 may distribute the second information to the terminal device 200 associated with the visit destination to which the moving body M visits next. At this time, before the moving body M enters the divided area DA including the visit destination to be visited next by the moving body M, the distribution processing unit 112 distributes the first information to the terminal device 200 associated with the visit destination to be visited next by the moving body M. That is, as shown in Fig. 12(A), even after the moving body M leaves a directly previous visit destination PD, before the moving body M enters a divided area DAnd including a next visit destination ND, the distribution processing unit 112 distributes the second information to the terminal device 200 associated with the next visit destination ND, and as shown in Fig. 12(B), after the moving body M enters the divided area DAnd including the next visit destination ND, the distribution processing unit 112 distributes the first information to the terminal device 200 associated with the next visit destination ND.

This makes it possible to prevent the user of the terminal device associated with the next visit destination from specifying the detailed position of the directly previous visit destination.

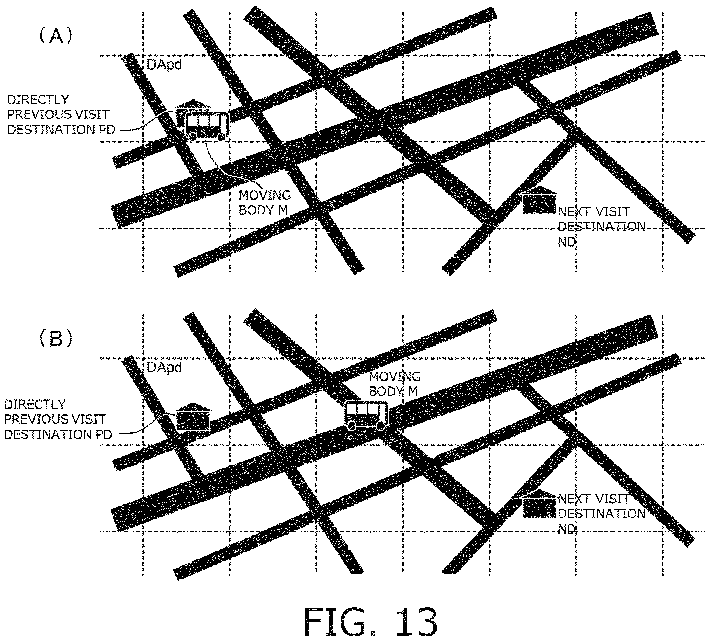

Furthermore, the distribution processing unit 112 may distribute the first information to the terminal device 200 associated with a visit destination to be visited next by the moving body M after the moving body M moves out of the divided area DA including a visit destination to which the moving body M has visited directly (or immediately) before. At this time, before the moving body M moves out of the divided area DA including the visit destination that has been visited directly before, the distribution processing unit 112 distributes the second information to the terminal device 200 associated with the visit destination to be visited next by the moving body M. That is, even after the moving body M leaves the directly previous visit destination PD as illustrated in Fig. 13(A), before the moving body M leaves a divided area DApd including the directly previous visit destination PD, the distribution processing unit 112 distributes the second information to the terminal device 200 associated with the next visit destination ND, and as illustrated in Fig. 13(B), after the moving body M leaves a divided area DApd including a directly previous visit destination PD, the distribution processing unit 112 distributes the first information to the terminal device 200 associated with the next visit destination ND.

This also makes it possible to prevent the user of the terminal device associated with the next visit destination from specifying the detailed position of the directly previous visit destination.

### <Switching of distribution information by divided section>

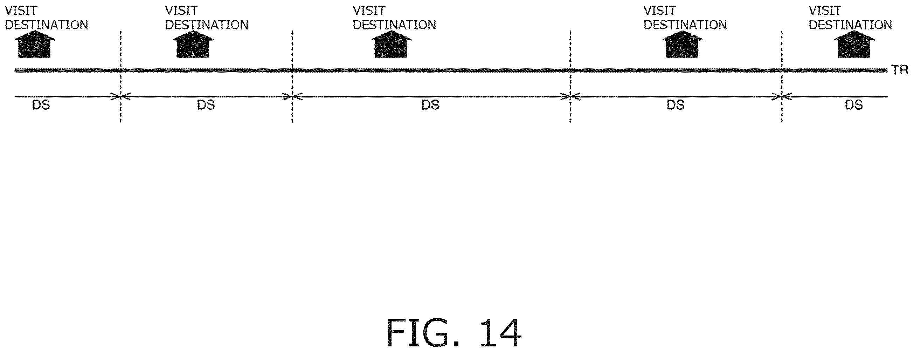

Furthermore, the information processing device 100 may further include a travel route division processing unit 114 that divides a travel route of the moving body M into a plurality of divided sections. At this time, as illustrated in Fig. 14, the travel route division processing unit 114 preferably divides a travel route TR of the moving body M into a plurality of divided sections DS so that one or less visit destinations are included in the divided section DS, that is, two or more visit destinations are not included in the divided section DS.

At this time, the distribution processing unit 112 preferably distributes the first information after the moving body M enters the divided section DS including the visit destination to be visited next by the moving body M. At this time, before entering the divided section DS including the visit destination to be visited next by the moving body M, the distribution processing unit 112 distributes the second information to the terminal device 200 associated with the visit destination to be visited next by the moving body M.

This also makes it possible to prevent the user of the terminal device associated with the next visit destination from specifying the detailed position of the directly previous visit destination.

In addition, the distribution processing unit 112 may distribute the first information after the moving body M moves out of the divided section DS including the visit destination that the moving body M has visited directly (or immediately) before. At this time, before the moving body M moves out of the divided section DS including the visit destination that has been visited directly before, the distribution processing unit 112 distributes the second information to the terminal device 200 associated with the visit destination to be visited next by the moving body M.

This also makes it possible to prevent the user of the terminal device 200 associated with the next visit destination from specifying the detailed position of the directly previous visit destination.

### <Switching of distribution information according to condition>

In addition, after the moving body M satisfies a predetermined condition, the distribution processing unit 112 may distribute the first information to the terminal device 200 associated with a visit destination to be visited next by the moving body M. At this time, before the moving body M satisfies the predetermined condition, the distribution processing unit 112 distributes the second information to the terminal device 200 associated with a visit destination to be visited next by the moving body M.

The predetermined condition may include, for example, at least one of a condition of "the moving body M has made a right turn or a left turn a predetermined number of times (for example, once) after leaving the visit destination that the moving body M has visited directly before", a condition of "the moving body M has traveled on a link different from the link where the visit destination that has been visited directly before by the moving body M exists after leaving the visit destination visited directly before", and a condition of "the moving body M is separated by a predetermined distance from the visit destination that has been visited directly before by the moving body M after leaving the visit destination visited directly before.

This also makes it possible to prevent the user of the terminal device 200 associated with the next visit destination from specifying the detailed position of the directly previous visit destination.

The present invention has been described above with reference to preferred embodiments of the present invention. Although the present invention has been described with reference to specific examples, various modifications and changes can be made to these specific examples without departing from the spirit and scope of the present invention described in the claims.

### Reference Signs List

- 100: Information processing device
- 110: Control unit
- 111: Moving body position information acquisition processing unit
- 112: Distribution processing unit
- 120: Storage unit
- 130: Communication unit
- 200: Terminal device
- 210: Control unit
- 211: Reception processing unit
- 212: Display processing unit
- 220: Communication unit
- 230: Display unit
- 300: In-vehicle device

## Claims

1. An information processing device comprising:
a moving body position information acquisition processing unit that acquires a moving body that goes around a plurality of visit destinations; and
a distribution processing unit that distributes distribution information including information regarding a current position of the moving body to a terminal device associated with the visit destinations, wherein
the distribution information includes first information and second information different from the first information, and
the distribution processing unit
distributes the first information to a terminal device associated with a visit destination to be visited next by the moving body, and
distributes the second information to another terminal device associated with a visit destination other than the visit destination to be visited next by the moving body.

2. The information processing device according to claim 1, wherein
the first information includes a detailed current position of the moving body, and
the second information does not include the detailed current position of the moving body.

3. The information processing device according to claim 2, wherein the second information includes information indicating an area in which the moving body currently exists.

4. The information processing device according to any one of claims 1 to 3, wherein
a two-dimensional area including all of the plurality of visit destinations is divided into a plurality of divided areas, and
the second information includes information indicating in which area of the plurality of divided areas the moving body exists.

5. The information processing device according to claim 4, further comprising an area division processing unit that divides the two-dimensional area including all of the plurality of visit destinations into the plurality of divided areas.

6. The information processing device according to claim 4 or 5, wherein the divided area includes a plurality of buildings.

7. The information processing device according to any one of claims 4 to 6, wherein the divided area includes one or less of the visit destinations.

8. The information processing device according to any one of claims 4 to 7, wherein the distribution processing unit distributes the first information to the terminal device associated with the visit destination to be visited next by the moving body after the moving body enters the divided area including the visit destination to be visited next by the moving body.

9. The information processing device according to any one of claims 4 to 7, wherein the distribution processing unit distributes the first information to the terminal device associated with the visit destination to be visited next by the moving body after the moving body moves out of the divided area including the visit destination to which the moving body has visited directly before.

10. The information processing device according to any one of claims 1 to 7, further comprising
a travel route division processing unit that divides a travel route of the moving body into a plurality of divided sections, wherein
the divided section includes one or less visit destinations, and
the distribution processing unit distributes the first information to the terminal device associated with the visit destination to be visited next by the moving body after the moving body enters the divided section including the visit destination to be visited next by the moving body.

11. The information processing device according to any one of claims 1 to 7, further comprising
a travel route division processing unit that divides a travel route of the moving body into a plurality of divided sections, wherein
the divided section includes one or less visit destinations, and
the distribution processing unit distributes the first information to the terminal device associated with the visit destination to be visited next by the moving body after the moving body moves out of the divided section including the visit destination to which the moving body has visited directly before.

12. The information processing device according to any one of claims 1 to 7, wherein after the moving body satisfies a predetermined condition, the distribution processing unit distributes the first information to the terminal device associated with the visit destination to be visited next by the moving body.

13. The information processing device according to claim 12, wherein the predetermined condition includes at least one of the moving body making a right turn or a left turn a predetermined number of times after leaving the visit destination visited by the moving body directly before, the moving body travelling on a link different from a link including a visit destination that has been visited directly before after leaving the visit destination visited directly before, and the moving body being away by a predetermined distance from a visit destination that has been visited directly before by the moving body after leaving the visit destination visited directly before.

14. An information processing method executed by a computer, the information processing method comprising:
a moving body position information acquisition processing step of acquiring a moving body that goes around a plurality of visit destinations; and
a distribution processing step of distributing distribution information including information regarding a current position of the moving body to a terminal device associated with the visit destination, wherein
the distribution information includes first information and second information different from the first information, and
in the distribution processing step,
the first information is distributed to the terminal device associated with a visit destination to be visited next by the moving body, and
the second information is distributed to the terminal device associated with the visit destination other than the visit destination to be visited next by the moving body.

15. An information processing program causing a computer to execute the information processing method according to claim 14.

16. A computer-readable storage medium storing the information processing program according to claim 15.
